# EUROPÄISCHE PATENTANMELDUNG

(11) **EP 1 148 351 A1**
(43) Veröffentlichungstag der Anmeldung: **24.10.2001**
(21) Anmeldenummer: 01109780.5
(22) Anmeldetag: 20.04.2001
(51) Int. Cl.: G01V 3/08

(54) **Verfahren und Vorrichtung zum Erfassen der magnetischen Suszeptibilität von Böden und/oder Sedimenten**

(30) Priorität: 20.04.2000 DE 10019694
(71) Anmelder: Rösler, Wolfgang, 80469 München (DE); Hoffmann, Viktor, 82515 Wolfratshausen (DE); Appel, Erwin, 72076 Tübingen (DE)
(72) Erfinder: Rösler, Wolfgang, 80469 München (DE); Hoffmann, Viktor, 82515 Wolfratshausen (DE); Appel, Erwin, 72076 Tübingen (DE)
(74) Vertreter: Prüfer, Lutz H., Dipl.-Phys.

(57) **Zusammenfassung**

Es wird ein Verfahren und eine Vorrichtung bereitgestellt zum Erfassen von insbesondere zivilisationsverursachten Verschmutzungen des Erdbodens und/oder des Wassers mit den Schritten
Messen der magnetischen Suszeptibilität an vorgegebenen Positionen innerhalb eines zu erfassenden Bereichs,
Erfassen der absoluten Ortskoordinaten (2,14) der jeweiligen vorgegebenen Positionen mittels eines globalen Positioniersystems und
Zeitlich und örtlich synchrones Abspreichern (15) der gemessenen Suszeptibilitätswerte mit den zugehörigen absoluten Ortskoordinaten.

## Beschreibung

Die Erfindung betrifft ein Verfahren und eine Vorrichtung zum Erfassen der magnetischen Suszeptibilität von Böden und/oder Sedimenten.

Die Verschmutzung des Erdbodens und des Wassers beeinträchtigt die Umwelt und die menschliche Gesundheit beträchtlich. Voraussetzung für einen effektiven Umweltschutz ist der Nachweis und die Überwachung von Boden- und Sedimentverschmutzung.

Aus dem Journal of Geochemical Exploration 66, 1999, Seiten 313 bis 326, ist ein Verfahren zum Erfassen und Kartieren von Verschmutzungen von Straßenrändern mittels Messung der magnetischen Suszeptibilität bekannt.

Die Messung der magnetischen Suszeptibilität erlaubt es, Bereiche zu identifizieren, in denen der Boden eine höhere als die mittlere Konzentration von Flugasche und anderen zivilisationsverursachten Stäuben, wie beispielsweise Stäube aus Kraftfahrzeug- und Flugzeugemissionen oder von der Stahlproduktion enthält. Diese zivilisationsverursachten Verschmutzungen enthalten hochmagnetische Teilchen, weshalb sie über eine magnetische Suszeptibilitätsmessung nachgewiesen werden können. Mit dem bekannten Verfahren ist jedoch ein Screeningverfahren oder gar ein Umweltmonitoring, d.h. das Beobachten der Veränderungen der gemessenen Werte über einen bestimmten Zeitraum nur unter sehr großem Zeit- und Kostenaufwand möglich.

Es ist Aufgabe der Erfindung, ein Verfahren und eine dazugehörige Vorrichtung zum Erfassen von zivilisationsverursachten Verschmutzungen des Erdbodens und/oder Wassers bereitzustellen, mit dem bzw. mit der insbesondere wiederholte Messungen schnell und kostengünstig durchzuführen sind.

Die Aufgabe wird gelöst durch ein Verfahren nach Patentanspruch 1 bzw. eine Vorrichtung nach Patentanspruch 13.

Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren.

Von den Figuren zeigen:
- Fig. 1: eine schematische Darstellung einer Vorrichtung gemäß einer ersten Ausführungsform der Erfindung; und
- Fig. 2: eine schematische Darstellung einer Vorrichtung gemäß einer zweiten Ausführungsform der Erfindung.

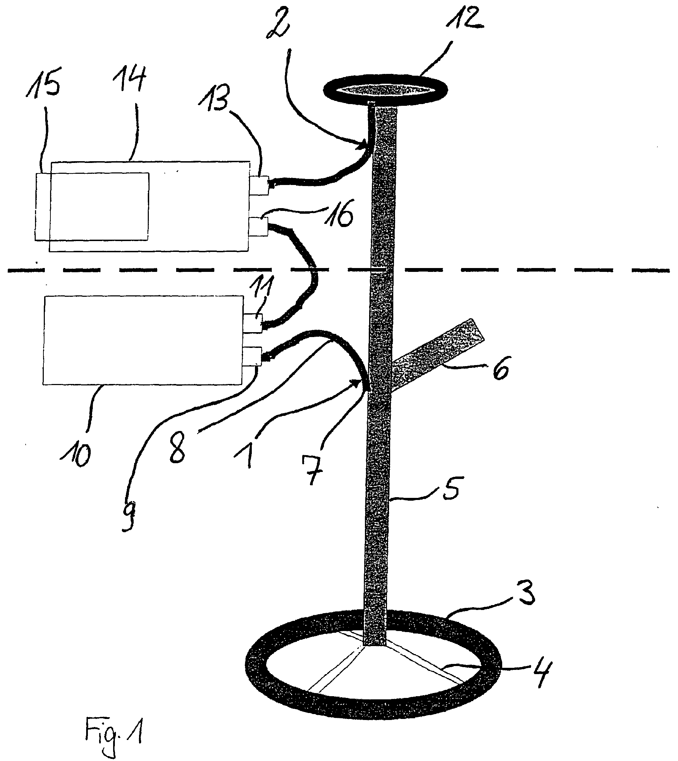

Wie aus Fig. 1 ersichtlich ist, ist die erfindungsgemäße Vorrichtung zusammengesetzt aus einem Suszeptibilitätsmeßgerät 1 zur Messung der magnetischen Suszeptibilität und aus einem globalen Positioniersystem 2 zum Erfassen von absoluten Ortskoordinaten. Solche Geräte sind jedes für sich bekannt. Das Suszeptibilitätsmeßgerät 1 weist eine in einem torus- bzw. ringförmigen Gehäuse vorgesehene Meßspule 3 auf. Das Gehäuse ist über Streben 4, welche mit der Meßspule 3 verbundene Signalkabel beherbergen, mit einem koaxial zum Gehäuse angeordneten und sich in vertikaler Richtung erstreckenden Rohr 5 verbunden, welches in einem vorbestimmten Abstand zur Meßspule 3 einen Tragegriff 6 aufweist, so daß die Meßspule 3 von Hand an gewünschten Positionen aufstellbar ist. Die Meßspule 3 ist über ein in dem Rohr 5 verlaufendes und an einem Ausgang 7 herausgeführtes Signalkabel 8 mit einem Sensoranschluß 9 einer Meß- und Anzeigeeinheit 10 verbunden. Die Meßund Anzeigeeineit beinhaltet elektronische Schaltungselemente zum Auslösen der Messung, Aufnehmen der gemessenen Werte und Anzeigen der gemessenen Werte. Die Meß- und Anzeigeeinheit 10 weist ferner eine Schnittstelle 11, beispielsweise in Form einer seriellen RS232-Schnittstelle, zum Transfer der gemessenen Daten zur weiteren Verwertung auf.

An dem der Meßspule 3 gegenüberliegenden Ende des Rohrs 5 ist ein Empfänger 12 eines Globalen Positioniersystems, beispielsweise einen GPS-Empfänger bzw. eine GPS-Antenne vorgesehen, zum Erfassen von durch Satelliten übertragenen Signalen zum Bestimmen der absoluten Ortskoordinaten des Ortes, an dem sich der Empfänger 12 befindet. Der GPS-Empfänger 12 ist über einen Empfängeranschluß 13 mit einer Steuer- bzw. Bedieneinheit 14 verbunden, welche eine Steuer- und Bedienelektronik für das Globale Positioniersystem beinhaltet. Die Steuer- und Bedieneinheit 14 weist ferner ein Speichermedium 15 zum Speichern von Daten auf. Das Speichermedium 15 ist bevorzugt als herausnehmbare, den üblichen Normen entsprechende PCI-Karte ausgebildet. Die Steuer- und Bedieneinheit 14 beinhaltet ferner einen Datentransferanschluß 16, der mit der Schnittstelle 11 des Meß- und Anzeigegeräts 10 des Suszeptibilitätsmeßgerät 1 verbunden ist.

Die Steuer- und Bedieneinheit 14 ist so ausgebildet, daß absolute Ortskoordinaten, die durch den GPS-Empfänger 12 erfaßt werden, zusammen mit den mit der Meßspule 3 des Suszeptibilitätsmeßgeräts 1 gemessenen Suszeptibilitätswerten zeitlich und örtlich synchronisiert in dem Speichermedium 15 abgelegt werden. Ferner ist die Steuer- und Bedieneinheit 14 so ausgebildet, daß Karten über ein Ortsgebiet, die bereits in digitaler Form vorliegen, ladbar sind. Die Meßelektronik und Anzeigeeinheit 10 des Suszeptibilitätsmeßgeräts 1 ist ferner über die Steuer- und Bedieneinheit 14 des GPS-Systems 2 triggerbar, so daß nach oder bei der Erfassung der absoluten Ortskoordinaten von der Steuer- und Bedieneinheit 14 ein Triggersignal an die Meß- und Anzeigeeinheit 10 des Suzeptibilitätsmeßgeräts 1 abgegeben wird, welches dort die Suszeptibilitätsmessung auslöst.

In der beschriebenen Ausführungsform sind die Meßelektronikbzw. Anzeigeeinheit 10 des Suszeptibilitätsmeßgeräts und die Steuer- und Bedieneinheit 14 des globalen Positioniersystems 2 als getrennte Geräte ausgebildet. Das hat den Vorteil, daß im Handel erhältliche Suszeptibilitätsmeßgeräte 1 und im Handel erhältliche globale Positioniersysteme 2 auf einfache und kostengünstige Weise kombiniert werden können. Es ist jedoch auch möglich, eine einzige Steuer- und Bedieneinheit für die gesamte Vorrichtung vorzusehen, die dann auch die Meßelektronik für das Suszeptibilitätsmeßgerät 1 beinhaltet.

Bei dem erfindungsgemäßen Verfahren wird in einer ersten Ausführungsform eine Messung der magnetischen Suszeptibilität an vorbestimmten Positionen innerhalb eines geographischen Gebiets vorgenommen. Dabei wird die Vorrichtung von Hand an die gewünschten Positionen auf den Boden gestellt, die absoluten Ortskoordinaten mittels des GPS-Empfängers 12 erfaßt und die magnetische Suszeptibilität mit der Meßspule 3 an der jeweiligen Posisiton gemessen. In einer bevorzugten Ausführungsform wird dabei die Messung der magnetischen Suszeptibilität über die Steuer- und Bedieneinheit 14 des GPS-Systems getriggert, d.h. sobald die gewünschten absoluten Ortskoordinaten erfaßt sind, wird die Messung der Suszeptibilität vorgenommen. Die Daten der erfaßten absoluten Ortskoordinaten werden zusammen mit den gemessenen Suszeptibilitätswerten in zeitlich und örtlich synchronisierter Form im Speichermedium 15 abgelegt. Es wird entweder ein beispielsweise lineares horizontal verlaufendes Profil vermessen oder ein gesamtes geographisches Gebiet mit einem Netz von Meßpunkten vermessen, deren Abstände voneinander in der Größenordnung der Ortsgenauigkeit des GPS-Systems, also bis zu 1 cm, liegen. Dadurch werden örtlich präzise und höchstaufgelöste Meßdaten erhalten. Mit bekannter Software wird aus den gemessenen Werten und den zugehörigen absoluten Ortskoordinaten eine Karte des vermessenen Bereiches erstellt. Dies kann nach Abschluß der Messung im Labor erfolgen, es ist aber auch möglich, gleich während der Messung die Kartierung vorzunehmen, indem die in dem Speichermedium 15 abgelegten Daten ausgelesen werden und sofort weiterverarbeitet werden. Das Verfahren hat gegenüber dem herkömmlichen Verfahren den Vorteil einer verbesserten Ortsauflösung und den weiteren erheblichen Vorteil, daß die Vermessung eines geographischen Gebiets und die anschließende Kartierung viel schneller als mit dem herkömmlichen Verfahren durchgeführt werden können. Dies erlaubt die Durchführung wiederholter Messungen desselben Gebietes sogar an den exakt gleichen Meßpunkten, wie bei einer vorhergehenden Messung, wodurch aufgrund der verbesserten Ortsauflösung und des relativ geringen Zeitaufwandes, die Überwachung von Veränderungen hinsichtlich der Werte der magnetischen Suszeptibilität eines geographischen Gebietes möglich ist.

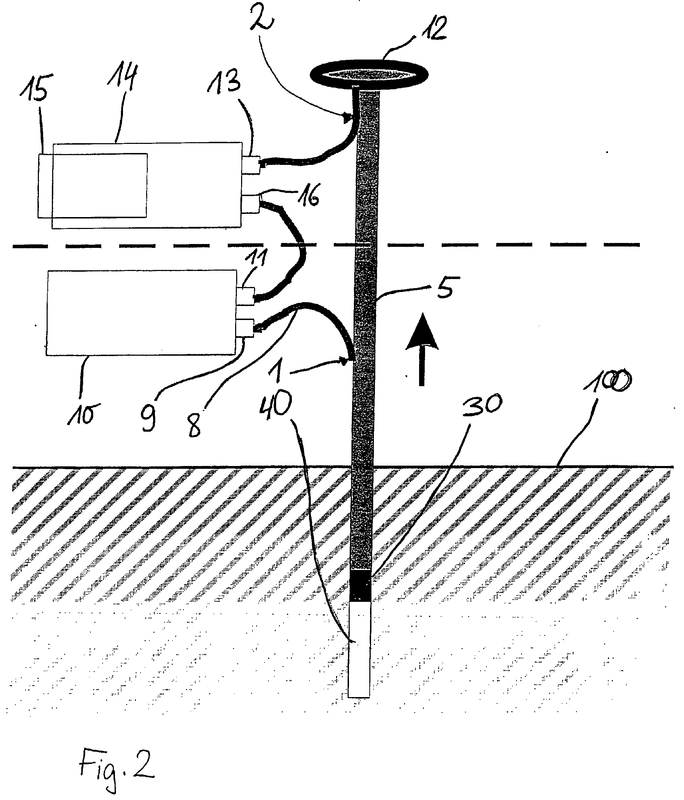

In der in Fig. 2 gezeigten abgewandelten Ausführungsform ist die Vorrichtung bis auf die Meßspule identisch zu der in Fig. 1 gezeigten Vorrichtung. Die Meßspule 30 der Vorrichtung gemäß Fig. 2 ist nicht wie die Meßspule 3 der Vorrichtung gemäß Fig. 1 in einem ringförmigen Gehäuse untergebracht, welches auf den Boden gestellt werden kann, sondern ist in dem Rohr 5 selbst vorgesehen. Damit können Tiefenprofile in einem Bodenabschnitt 100 vermessen werden. Es wird ein Loch 40 in den Boden 100 vorgebohrt und das Suszeptibilitätsmeßgerät 1 mit der am Ende des Rohres 5 befindlichen Meßsonde 30 nach und nach in das Loch 40 vorgeschoben. Damit lassen sich insbesondere Verschmutzungen des Erdbodens in Abhängigkeit der Tiefe ausmessen.

Insbesondere das Suszeptibilitätsmeßgerät nach der in Fig. 2 gezeigten Ausführungsform ist auch für Messungen in Wasser geeignet.

Das Verfahren und die Vorrichtung sind nicht darauf beschränkt, zivilisationsverursachte Verschmutzungen des Bodens zu erfassen, sondern sind auch geeignet, jegliche Art von Anomalien der magnetischen Suszeptibilität von Böden, Sedimenten und Gesteinen im allgemeinen nachzuweisen.

Abwandlungen der Vorrichtung sind möglich. Die Kommunikation zwischen dem GPS-Gerät und dem Suszeptibilitätsmeßgerät kann auch bidirektional sein. Somit kann auch die Erfassung der absoluten Ortskoordinaten von der Suszeptibilitätsmessung getriggert werden oder die Erfassung der absoluten Ortskoordinaten und die Suszeptibilitätsmessung kann durch ein vorbestimmtes Signal entweder gleichzeitig oder in einem definierten Abstand ausgelöst werden.

Es kann auch eine Anordnung mit mehreren Meßspulen zur Messung der magnetischen Suszeptibilität, die beispielsweise auf einem Schlitten oder einem Fahrzeug angeordnet sind, der bzw. das motorisch oder von Hand über einen zu vermessenden Bereich bewegt wird, verwendet werden.

Es können zweidimensionale oder dreidimensionale Karten und oder ein beliebig definiertes Profil des zu vermessenden Bereichs erstellt werden.

## Patentansprüche

1. Verfahren zum Erfassen der magnetischen Suszeptibilität von Böden und/oder Sedimenten mit den Schritten
Messen der magnetischen Suszeptibilität an vorgegebenen Positionen innerhalb eines zu erfassenden Bereichs,
Erfassen der absoluten Ortskoordinaten der jeweiligen vorgegebenen Positionen mittels eines globalen Positioniersystems und
zeitlich und örtlich synchronisiertes Abspeichern der gemessenen Suszeptibilitätswerte mit den zugehörigen absoluten Ortskoordinaten.

2. Verfahren nach Anspruch 1, **dadurch gekennzeichnet, daß** die gemessenen Suszeptibilitätswerte und die zugehörigen absoluten Ortskoordinaten in einer einzigen Datei abgespeichert werden und/oder
daß aus den gemessenen Suszeptibilitätswerten Verunreinigungen des Bodens und/oder des Wassers, die hochmagnetische Teilchen wie z.B. aus Flugasche, zivilisationsverursachten Stäuben z.B. aus Kraftfahrzeug- und Flugzeugemissionen oder aus der Stahlproduktion nachgewiesen werden.

3. Verfahren nach Anspruch 1 oder 2, **dadurch gekennzeichnet, daß** eine geographische Fläche in einem Netz von vorgegebenen Positionen vermessen wird und/oder
daß ein Tiefenprofil an einer vorgegebenen Position gemessen wird.

4. Verfahren nach einem der Ansprüche 1 bis 3, **dadurch gekennzeichnet, daß** das Messen der magnetischen Suszeptibilität von dem Erfassen der absoluten Koordinaten getriggert wird oder
daß das Erfassen der absoluten Ortskoordinaten von dem Ereignis der Messung der magnetischen Suszeptibilität getriggert wird oder
daß das Messen der magnetischen Suszeptibilität und/oder das Erfassen der absoluten Koordinaten in Abhängigkeit von einem von außen vorgegebenen Signal erfolgt.

5. Verfahren nach einem der Ansprüche 1 bis 4, **dadurch gekennzeichnet, daß** die absoluten Ortskoordinaten und die gemessenen Suszeptibilitätswerte mit einer eingelesenen digitalen Karte korreliert werden und/oder
daß eine Karte der Verteilung der magnetischen Suszeptibilität des vermessenen Bereichs erstellt wird und/oder
daß die Karte bereits während der Messung erstellt wird.

6. Verwendung des Verfahrens nach einem der Ansprüche 1 bis 5 zum Monitoring eines vorgegebenen geografischen Bereichs.

7. Vorrichtung zum Erfassen der magnetischen Suszeptibilität von Böden und/oder Sedimenten mit
einem Suszeptibilitätsmeßgerät (1) zum Messen der magnetischen Suszeptibilität,
einem Empfänger (12) eines globalen Positioniersystems (2) zum Erfassen von absoluten Ortskoordinaten, der mit dem Suszeptibilitätsmeßgerät (1) verbunden ist und
einer Vorrichtung, die die gemessenen Suszeptibilitätswerte zeitlich und örtlich synchron mit den von dem Empfänger (12) erfaßten absoluten Ortskoordinaten verknüpft.

8. Vorrichtung nach Anspruch 7, **gekennzeichnet durch** ein Speichermedium (15), in dem die absoluten Ortskoordinaten mit den verknüpften Suszeptibilitätswerten abgelegt sind und/oder **gekennzeichnet durch** eine elektronische Schaltung, die so ausgebildet ist, daß das Suszeptibilitätsmeßgerät (1) über eine Steuerung des globalen Positioniersystem-Empfängers (12) triggerbar ist.

9. Vorrichtung nach Anspruch 7 oder 8, **dadurch gekennzeichnet, daß** eine Steuerung (14) des globalen Positioniersystems (2) vorgesehen ist, die mit dem Suszeptibilitätsmeßgerät (1) bidirektional kommuniziert.

10. Karte einer Verteilung der magnetischen Suszeptibilität von Böden und/oder Sedimenten eines geographischen Bereichs, die mit dem Verfahren nach einem der Ansprüche 1 bis 9 erstellt worden ist.
